Europäisches Patentamt

European Patent Office

Office européen des brevets

(19)

(11) Veröffentlichungsnummer: **0 216 922**
**B1**

(12) **EUROPÄISCHE PATENTSCHRIFT**

(45) Veröffentlichungstag der Patentschrift: 24.10.90

(51) Int. Cl.⁵: **A 01 B 49/02**, A 01 B 33/16

(21) Anmeldenummer: **86903289.6**

(22) Anmeldetag: **02.04.86**

(86) Internationale Anmeldenummer:
**PCT/EP86/00199**

(87) Internationale Veröffentlichungsnummer:
**WO 86/05652 09.10.86 Gazette 86/22**

(54) LANDWIRTSCHAFTLICHE MASCHINE FÜR DIE BODENBEARBEITUNG.

(30) Priorität: **03.04.85 IT 1247185**

(43) Veröffentlichungstag der Anmeldung:
**08.04.87 Patentblatt 87/15**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
**AU-B-4 672 979**
**DE-A-2 506 223**
**FR-A-1 501 969**
**GB-A-2 127 262**
**GB-A-2 137 461**
**US-A-1 689 550**
**US-A-3 185 220**

(73) Patentinhaber: **PEGORARO, Vittorio**
**Via Torri Di Confine 6**
**Gambellara (Vicenza) (IT)**

(72) Erfinder: **PEGORARO, Vittorio**
**Via Torri Di Confine 6**
**Gambellara (Vicenza) (IT)**

(74) Vertreter: **Gustorf, Gerhard, Dipl.-Ing.**
**Patentanwalt Dipl.-Ing. Gerhard Gustorf**
**Bachstrasse 6 A**
**D-8300 Landshut (DE)**

Courier Press, Leamington Spa, England.

EP 0 216 922 B1

**Beschreibung**

Die Erfindung betrifft eine landwirtschaftliche Maschine für die Bodenbearbeitung mit mehreren Reihen von Bearbeitungswerkzeugen, von denen jede Reihe auf einer Achse angeordnet ist, die schräg zur Bewegungsrichtung der Maschine verläuft.

Eine derartige Maschine ist in der FR-PS 1 501 969 beschrieben und dargestellt. Bei dieser Maschine befindet sich vor einer Reihe von pflugartigen Werkzeugen eine Reihe von frei drehbaren Scheiben, die die Aufgabe haben, den Boden in Streifen zu schneiden, die dann von den pflugartigen Werkzeugen angehoben und über pflanzliches Material gelegt werden, das sich im Erdreich befand. Eine abschließende Reihe von Werkzeugen zum Zerkleinern hat die Aufgabe, die erwähnten Streifen aus Erdreich zu zerkleinern, ohne daß dabei das pflanzliche Material erfaßt wird.

Diese Maschine hat dadurch eine Grenze, daß das pflanzliche Material, das aus Resten eines vorangegangenen Anbaus bestehen kann oder in dem noch nicht landwirtschaftlich genutzten Boden gewachsen ist, nicht als natürlicher Dünger ausgenutzt werden kann, weil es nicht ausreichend aufbereitet ist, um in einem Zersetzungsprozeß kompostieren zu können.

Die AU-B 524 172 betrifft eine landwirtschaftliche Maschine, die dazu dient, jeweils zwei Furchen anzulegen, die für den Anbau von Zuckerrohr geeignet sind. Zu diesem Zweck sind zu beiden Seiten einer Mittelwalze zwei schrägstehende Zahnscheiben angeordnet, die die Aufgabe haben, den Boden zur Furchenbildung nach außen zu schieben. Auf der der Mittelwalze abgewandten Seite jeder Zahnscheibe befinden sich ein Aufreißarm und eine Grubberzinke. Hinter dieser in etwa einer Reihe angeordneten Werkzeuggruppe sind eine Fräse mit einer Nachlaufwalze angeordnet.

Diese Maschine hat nur einen sehr begrenzten Einsatzzweck, beispielsweise für den Anbau von Zuckerrohr, da sie jedesmal nur zwei Furchen in einer Reihe herstellt. Dabei werden Pflanzenreste allenfalls in einem sehr begrenzten Bereich der Arbeitsbreite der Maschine erfaßt, ohne daß eine starke Zerkleinerung und intensive Durchmischung mit dem Erdreich bewirkt werden kann.

In der US-A 1 689 550 ist eine landwirtschaftliche Maschine beschrieben und dargestellt, bei der in Arbeitsrichtung hinter einer Druckrolle eine Reihe von Zahnscheiben auf einer gemeinsamen Welle angebracht ist. Die Zahnscheiben sind zu beiden Seiten der Längsmittelachse der Maschine jeweils parallel zueinander angeordnet, wobei beide Gruppen schräg zueinander verlaufen. Weitere Bodenbearbeitungswerkzeuge sind nicht vorgesehen.

Der Erfindung liegt die Aufgabe zugrunde, eine Maschine der angegebenen Gattung zur Verfügung zu stellen, mit der es möglich ist, im Boden vorhandenes Pflanzenmaterial so zu bearbeiten, daß es für nachfolgende landwirtschaftliche Nutzungen zu natürlichem Dünger zerfallen kann, wobei das zerkleinerte Pflanzenmaterial teilweise mit gut zerkrümeltem Erdreich durchmischt und zum Teil von dem zerkrümelten Erdreich bedeckt wird.

Diese Aufgabe wird bei der Maschine für die Bodenbearbeitung der eingangs umrissenen Bauart erfindungsgemäß gelöst durch eine erste Einrichtung zum Zerkleinern des Pflanzenmaterials, hinter der eine Reihe von Aufreißorganen zum Aufreißen und Anheben von Erdreich und zum Unterpflügen des zerkleinerten Pflanzenmaterials angeordnet ist, und durch eine abschließende Gruppe von Werkzeugen zum Zerkleinern des Bodens und zum abschließenden Wenden des zerkrümelten Erdreiches auf das zerkleinerte Pflanzenmaterial.

Vorzugsweise besteht die erste Einrichtung aus einem Organ zum Abknicken des Pflanzenmaterials gegen den Boden und aus einer nachfolgenden Reihe von rotierenden Messern zum Zerkleinern des Pflanzenmaterials gegen den Boden.

Eine derartige Maschine erfüllt in vorbildlicher Weise ein Erfordernis, das in der modernen Landwirtschaft besonders wichtig ist, bei der einem Einsatz von häufig zu großen Mengen künstlicher Düngemittel die Verwendung von natürlichen Düngern soweit wie möglich vorgezogen wird, wobei diese natürlichen Düngemittel viel wirtschaftlicher und weniger umweltbelastend durch die Dekomposition bereits vorhandenen pflanzlichen Materials erhalten werden.

Gegenwärtig arbeiten die bekannten Einrichtungen zum Zerkleinern von Pflanzenmaterial in der Weise, daß das Erdreich nicht erfaßt wird, da nur der Teil der Stengel, Stoppeln oder anderer Pflanzenteile zerkleinert wird, der sich über dem Boden befindet, da die Einrichtungen in der Luft arbeiten. Die Maschine gemäß der Erfindung weist diesen Nachteil nicht auf, da sie das Pflanzenmaterial gegen den Boden hin zerkleinert und dadurch eine Schicht erzeugt, die aus mit zerkleinertem Pflanzenmaterial gemischtem Erdreich besteht.

Hinter der ersten Einrichtung zum Zerkleinern des Pflanzenmaterials dienen die Aufreißorgane zum Anheben des Bodens und zum Unterpflügen des zerkleinerten Pflanzenmaterials, während die abschließende Gruppe von Werkzeugen die Funktion einer Egge haben und das Erdreich, Klumpen und Schollen krümeln, wenden und schließlich die Bedeckung des zerkleinerten Pflanzenmaterials mit zerkrümeltem Erdreich vervollständigen.

Mit einer solchen Maschine kann eine zwischen 10 cm und 40 cm dicke Schicht geschaffen werden, die aus einer ersten Schicht aus zerkrümeltem Erdreich, aus einer zweiten Schicht von mit zerkleinertem Pflanzenmaterial gemischtem, zerkrümeltem Erdreich und aus einer dritten Schicht aus von den Werkzeugen zum Zerkleinern aufgerissenem und nicht an die Oberfläche gelangten Erdreich besteht; dieses aus den drei Schichten bestehende Erdreich bildet die besten Voraussetzungen für einen Austausch von Luft und Wasser im Erdreich, wodurch der Zerfallsprozeß der organischen Rückstände beschleunigt wird und die besten Bedingungen für den Anbau neuer Pflanzen geschaffen werden.

Ein weiterer Vorteil besteht in einer erheblichen Energieersparnis, die mit dem Einsatz der Maschine gemäß der Erfindung gegenüber herkömmlichen Maschinen wie dem Pflug möglich ist. Mit einem Pflug muß nämlich ein Traktor eingesetzt werden, dessen Leistung erheblich größer ist als die, die die Maschine gemäß der Erfindung verlangt. Um ein Ergebnis zu erzielen, das mit demjenigen der erfindungsgemäßen Maschine vergleichbar ist, müssen überdies mehrere landwirtschaftliche Geräte zum Einsatz gebracht werden, nämlich ein Gerät zum Schneiden von Stengeln, ein Aufreißgerät, ein Pflug sowie eine Egge, wodurch die Notwendigkeit mehrerer Durchgänge des Traktors über den Boden besteht, während mit der Maschine gemäß der Erfindung nur ein einziger Durchgang erforderlich ist.

Weiterhin erzeugt die Maschine gemäß der Erfindung im Gegensatz zu bekannten landwirtschaftlichen Maschinen der bereits beschriebenen Bauart keine glatte Trennung zwischen der bearbeiteten Bodenschicht und dem darunterliegenden Boden, sondern beste Voraussetzungen dafür, daß die unteren Bodenschichten an einem Luft- und Wasseraustausch mit der darüberliegenden Schicht teilhaben.

Für den Fall, daß blanker Boden vorliegt, der keine Rückstände vorangegangenen Anbaus oder Unkraut aufweist, genügt der Einsatz desjenigen Teils der Maschine gemäß der Erfindung, der die Aufreißorgane und die Zerkleinerungswerkzeuge enthält.

Weitere Merkmale und Vorteile der Erfindung ergeben sich aus den übrigen Ansprüchen und aus der folgenden Beschreibung von Ausführungsbeispielen, die in der Zeichnung dargestellt sind.

Es zeigen:

Figur 1 eine Draufsicht einer landwirtschaftlichen Maschine gemäß der Erfindung,

Figur 2 eine Seitenansicht der Maschine in Richtung des Pfeiles II der Figur 1,

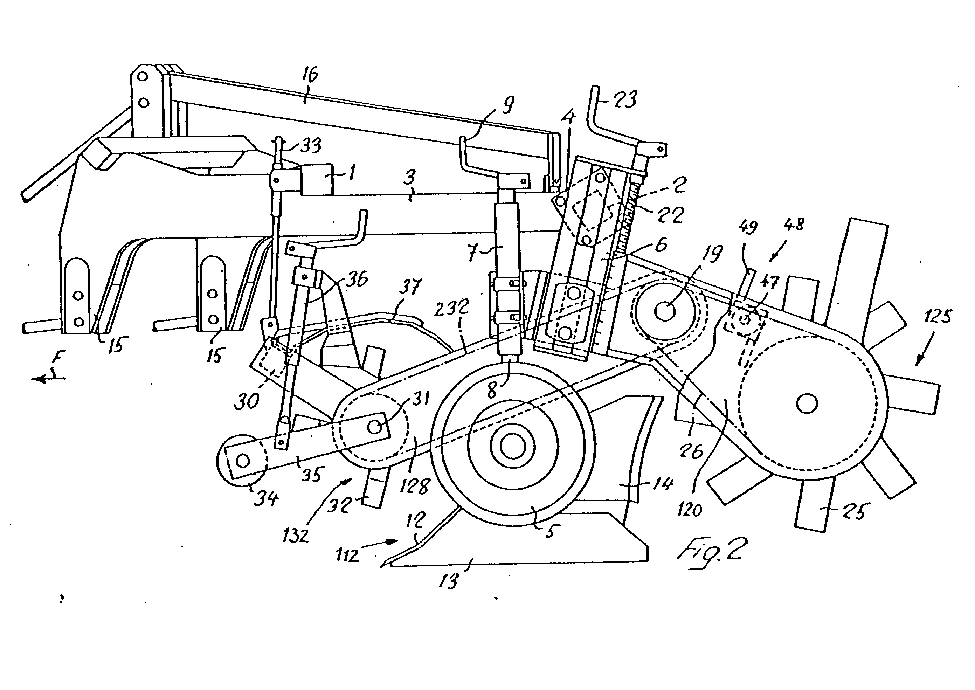

Figur 3 einen Längsschnitt der Maschine in der Ebene III—III de Figur 1,

Figur 4 die Seitenansicht eines Aufreißorgans,

Figur 5 die Vorderansicht eines Aufreißorgans und

Figur 6 eine Variante zur Aufhängung der ersten Einrichtung zum Zerkleinern des Pflanzenmaterials.

Die in der Zeichnung dargestellte, landwirtschaftliche Maschine zur Bodenbearbeitung hat einen Grundrahmen mit einer vorderen Traverse 1 und einer hinteren Traverse 2, die über Zwischenstreben 3 und Seitenstreben 4 miteinander verbunden sind. Die Traversen 1 und 2 verlaufen parallel zueinander, jedoch schräg zur Fortbewegungsrichtung F der Maschine, und zwar um einen Winkel zwischen 5° und 45°, vorzugsweise etwa 20° zur Orthogonalen der Bewegungsrichtung F. Die Seitenstreben 4 verlaufen rechtwinklig zu den Traversen 1 und 2, während die Zwischenstreben 3 parallel zur Bewegungsrichtung F verlaufen und damit schräg zu den Traversen 1 und 2.

Der Grundrahmen 1, 2, 3, 4 trägt in der Nähe der hinteren Traverse 2 zwei seitlich angeordnete Räder 5, die in der Höhe einstellbar sind und über die sich der Grundrahmen am Boden abstützt. Bei dem dargestellten Ausführungsbeispiel ist an den beiden Enden der hinteren Traverse 2 jeweils eine seitliche Stütze 6 befestigt, mit der ein vertikales Führungsrohr 7 fest verbunden ist, in welchem ein Bein 8 verschiebbar geführt ist, das an seinem unteren Ende eines der Räder 5 trägt und das über eine manuell zu betätigende Stellspindel 9 höhenverstellbar ist. Die Räder 5 sind in Bewegungsrichtung F der Maschine ausgerichtet, das heißt, ihre horizontalen Drehachsen verlaufen rechtwinklig zu der Bewegungsrichtung F. Die zur Höheneinstellung dienenden Räder 5 können abnehmbar oder einschwenkbar sein, um die Breite der Maschine während des Transports zu verringern.

Die hintere Traverse 2 hat einen vorzugsweise quadratischen Querschnitt und dient als Träger für eine Reihe von Aufreißorganen 112, von denen jedes einen Arm 10 hat, der mittels einer Klemme 11 an der Traverse 2 befestigt und zum Boden hin gerichtet ist, vorzugsweise leicht nach vorn geneigt. An seinem unteren Ende trägt der Arm 10 jedes Aufreißorgans ein Messer 12, das vorzugsweise spitz ausläuft.

Obwohl die Aufreißorgane 12 an der schräg zur Bewegungsrichtung F der Maschine verlaufenden Traverse 2 befestigt sind, sind sie in Bewegungsrichtung F ausgerichtet. Jedes Aufreißorgan trägt an seinem unteren Ende eine i.w. vertikale Leitplatte 13, die an einer Seite des Arms 10 befestigt ist und sich von diesem nach hinten erstreckt. Die Leitplatte 13 hat eine Lenkfunktion, um die Maschine in ihrer Fortbewegungsrichtung zu halten, indem sie seitlichen Ablenkkräften entgegenwirkt, die von den Werkzeugen verursacht werden, die vor und nach den Aufreißorganen 112 angeordnet sind und deren Achsen, worauf noch eingegangen wird, schräg zur Bewegungsrichtung F verlaufen. Am unteren Ende jedes Armes 10 ist auf der der Leitplatte 13 gegenüberliegenden Seite ein Pflugstreichblech 14 befestigt, das sich nach hinten erstreckt und dessen Höhe am Arm 10 des Aufreißorgans verändert und eingestellt werden kann.

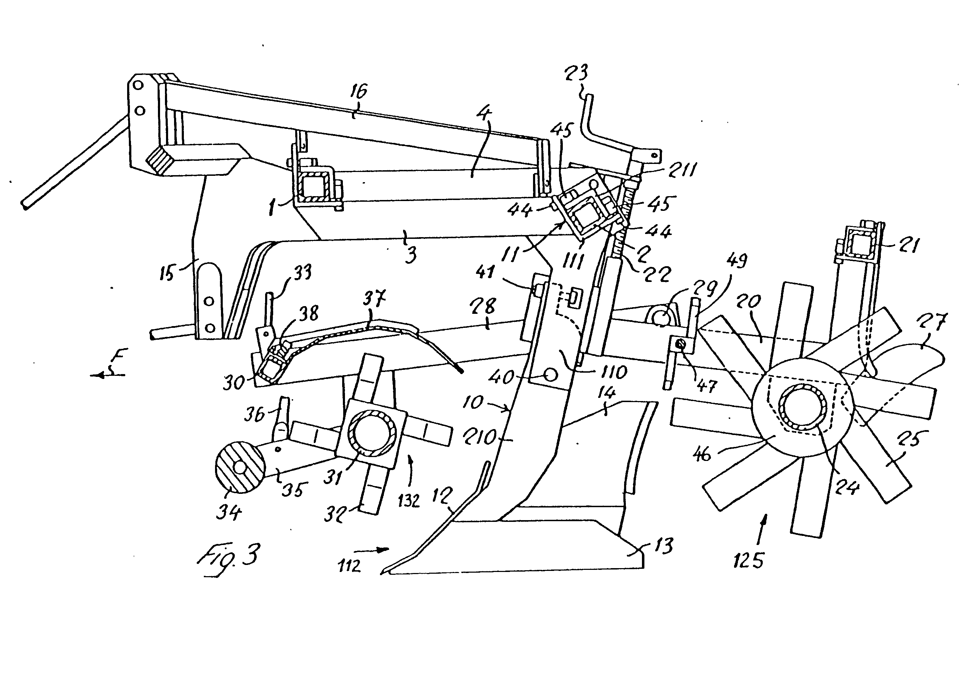

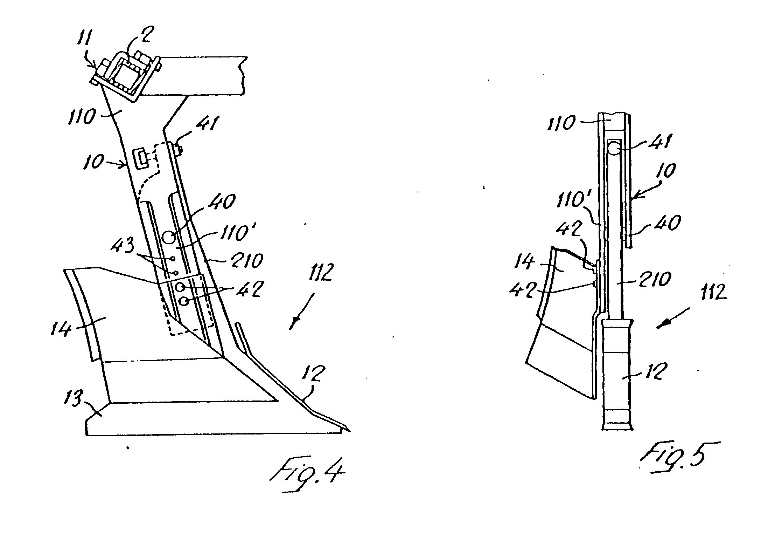

Wie vor allem die Figuren 4 und 5 zeigen, hat der Arm 10 jedes Aufreißorgans 112 einen Oberarm 110, der beispielsweise gabelförmig ausgebildet und mit einer Klemme 11 an der Traverse 2 des Grundrahmens befestigt ist. Mit dem Oberarm 110 ist ein Unterarm 210 verbunden, der über einen Gelenkzapfen 40 am Oberarm 110 angelenkt ist und dessen oberes Ende über einen in Zugrichtung belasteten Bolzen 41 am Oberarm 110 befestigt ist. Der Unterarm 210 trägt sowohl das Messer 12 als auch die Leitplatte 13. Das Pflugstreichblech 14 ist hingegen an einer unteren Verlängerung 110' des Oberarms 110 befestigt und kann über Schrauben 42 und eine vertikale Reihe von Bohrungen 43, die in die untere Verlängerung 110' eingearbeitet sind, in der Höhe verstellt werden. Wenn das Messer 12 des Aufreißorgans 112 gegen einen zu harten Widerstand stößt, bricht der Bolzen 41, so daß der Unterarm 210 um den Gelenkzapfen 40 wegschwenken kann. Das Pflugstreichblech 14 ist dabei so ausgebildet, daß das Messer 12 neben diesem vorbeischwenken kann, wenn der Bolzen 41 bricht. Die Leitplatte 13 nimmt selbstverständlich auch die Seitenkräfte auf, die durch das Pflugstreichblech 14 erzeugt werden.

Im gezeigten Ausführungsbeispiel ist der Oberarm 110 jedes Armes 10 an der Traverse 2 mittels einer besonders ausgebildeten Klemme 11 befestigt. Die Traverse 2 hat dabei einen quadratischen, auf einer Spitze stehenden Hohlquerschnitt, d. h. daß eine Diagonale i.w. vertikal verläuft. Die Klemme 11 besteht aus zwei Spannbacken 111 und 211 mit einem winkelförmigen Profil, wobei die Spannbacke 111 gegenüber der Spannbacke 211 längere Schenkel aufweist, die sich über die freien Enden der Schenkel der Spannbacke 211 hinaus erstrecken. Zum Befestigen und Verspannen der beiden Spannbacken 111 und 211 untereinander dienen Schrauben 44, die durch Bohrungen in den längeren Schenkeln der Spannbacke 111 hindurchgesteckt und in Büchsen 45 eingeschraubt sind, die parallel zu den Schenkeln der Spannbacke 211 verlaufen und an dieser befestigt sind, beispielsweise durch Schweißen.

Der Grundrahmen 1, 2, 3, 4 hat vorn zwei untere Arme 15 und einen zwischen diesen liegenden, oberen Arm 16 zum Anbau an einen bekannten Dreipunkt-Kraftheber eines Traktors. Die Arme 15 und 16 verlaufen parallel zur Bewegungsrichtung F der Maschine. Mit Hilfe des Dreipunktanbaus der Arme 15, 16 am Traktor kann der Grundrahmen und damit die gesamte Maschine angehoben und von dem Traktor transportiert werden. Zur Bodenbearbeitung wird die Maschine über die beiden seitlichen Räder 5 auf dem Boden abgestützt und vom Traktor gezogen. Die Bearbeitungstiefe der Aufreißorgane 112 kann durch Höhenverstellung der Räder 5 bezüglich des Grundrahmens 1, 2, 3, 4 eingestellt werden.

An der hinteren Traverse 2 des Grundrahmens ist ein Winkelgetriebe 17 befestigt, das auch ein Wechselgetriebe zur Drehgeschwindigkeitsänderung aufweist und dessen Eingang über eine Kardanwelle 18 mit dem Zapfwellenantrieb des Traktors verbunden ist, während sein Ausgang mit einer in Querrichtung verlaufenden Kardanwelle 19 gekoppelt ist.

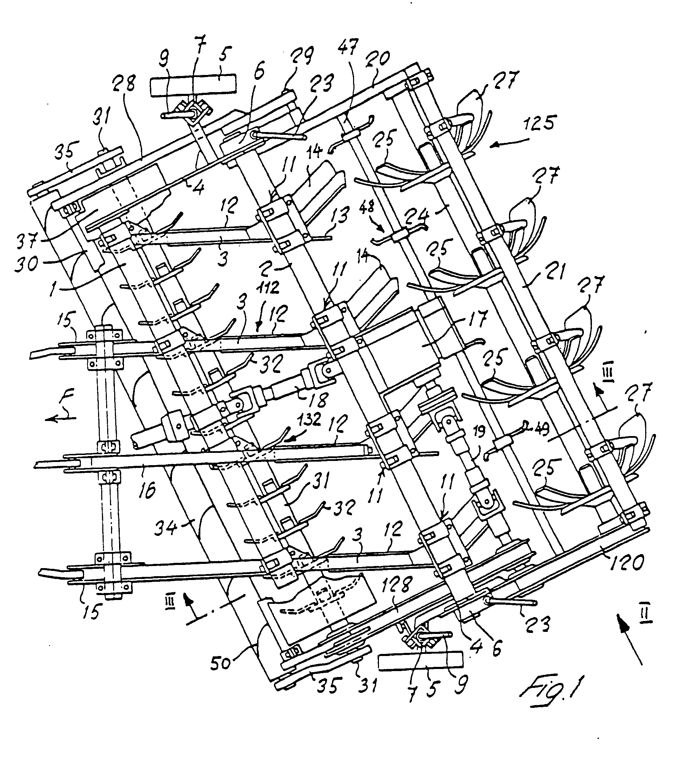

Am hinteren Ende des Grundrahmens 1, 2, 3, 4 ist ein hinterer Hilfsrahmen befestigt, der aus zwei Seitenstreben 20, 120 besteht, die über eine hintere Traverse 21 miteinander verbunden sind. Die beiden Seitenstreben 20, 120 sind jeweils an einer der seitlichen Stützen 6 des Grundrahmens befestigt und in deren Längsrichtung verschiebbar geführt. Die Höhenverstellung der Seitenstreben 20, 120 des hinteren Hilfsrahmens in den Führungen der seitlichen Stützen 6 kann beispielsweise durch manuell zu betätigende Stellspindeln 22 mit Griff 23 herbeigeführt werden. Zwischen den beiden Seitenstreben 20 und 120 des hinteren Hilfsrahmens ist unter der Traverse 21 eine Welle 24 drehbar gelagert, auf der Rotorwerkzeuge 125 zum Zerkleinern und Wenden von Erdreich befestigt sind. Die Welle 24 dieser Rotorwerkzeuge 125 verläuft schräg zur Normalen der Bewegungsrichtung F der Maschine, und zwar mit demselben Winkel (z.B etwa 20°) wie die Traversen 1 und 2 des Grundrahmens. Die Welle 24 ist mit der Kardanwelle 19 des Winkelgetriebes 17 über einen Kettentrieb 26 gekoppelt, der in der kastenförmigen Seitenstrebe 120 des hinteren Hilfsrahmens 20, 120, 21 angeordnet ist. Jedes der Rotorwerkzeuge 125 zum Zerkleinern und Wenden des Erdreiches besteht aus einer Reihe von Schaufeln 25, die winklig zueinander auf Abstand angeordnet sind und beispielsweise so gekrümmt sind, daß das Rotorwerkzeug 125, wie Figur 1 zeigt, etwa die Form einer kugelförmigen Schale hat. Jedem Rotorwerkzeug 125 ist ein Abstreifblech 27 zugeordnet, das an der darüberliegenden Traverse 21 des hinteren Hilfsrahmens befestigt ist und das mit den Schaufeln 25 des Rotorwerkzeuges 125 zusammenarbeitet, um von diesen das Erdreich abzustreifen und das Umwenden des gekrümelten Erdreiches zu vervollständigen.

Die Schaufeln 25 jedes Rotorwerkzeuges 125 sind an einer Nabe 46 befestigt, die ihrerseits an der Welle 24 befestigt ist. Vorzugsweise sind die Schaufeln 25 in radialer Richtung so verwunden, daß sie die Wirkung einer Egge und eines Organs zum Umwenden und damit zur Vervollständigung des Bedeckens des zerkleinerten Pflanzenmaterials mit gekrümeltem Erdreich ausüben. Zu diesem Zweck verlaufen die Schaufeln 25 schräg zur Radialrichtung der Nabe 46.

Die Schaufeln 25 arbeiten nicht in den Furchen, die durch die Messer 12 der Aufreißorgane 112 gebildet worden sind, sondern zwischen den Furchen. Daraus ergibt sich, daß sie keine feste Bodensohle erzeugen, sondern reines Erdreich anheben.

Vorzugsweise ist die Drehgeschwindigkeit der Welle 24 und damit der Rotorwerkzeuge 125 veränderbar. Wenn eine hohe Drehzahl gewählt wird, bringen die Rotorwerkzeuge 125 mehr reines Erdreich nach oben, während bei niedrigen Drehzahlen das Aufwerfen von Erdreich und das Unterpflügen geringer sind.

Zwischen den Aufreißorganen 112 und den Werkzeugen 125 zum Zerkleinern und abschließenden Wenden des Erdreichs befindet sich eine Zwischenwelle 47, die eine Reihe von Klumpenbrechern 48 trägt. Jeder Klumpenbrecher 48 besteht aus zwei diametral gegenüberliegend befestigten Messern 49, die, wie Figur 1 zeigt, zusammen ein S-förmiges Profil bilden. Die Drehgeschwindigkeit der Zwischenwelle 47 ist größer als diejenige der Rotorwerkzeuge 125. Die Klumpenbrecher 48 haben die Aufgabe, große Erdklumpen zu zerstückeln, die von den hinteren, pflugartig wirkenden Teilen 14 (Pflugstreichbleche) der Aufreißorgane 112 angehoben worden sind.

Unter dem Grundrahmen 1, 2, 3, 4 befindet sich ein vorderer Hilfsrahmen mit zwei Seitenstreben 28, 128, die an den zugehörigen Seitenstreben 20, 120 des hinteren Hilfsrahmens um eine horizontale Achse 29 schwenkbar angelenkt sind, die koaxial zur Lagerung der Kardanwelle 19 in der kastenförmigen Seitenstrebe 120 des hinteren Hilfsrahmens verläuft. Die vorderen Enden der Seitenstreben 28 und 128 des vorderen Hilfsrahmens sind durch eine Traverse 30 verbunden. Vor den Aufreißorganen ist zwischen den Seitenstreben 28, 128 des vorderen Hilfsrahmens eine Welle 31 drehbar gelagert, die mit der Kardanwelle 19 des Winkelgetriebes 17 über einen Kettentrieb 232 verbunden ist, der in der kastenförmigen Seitenstrebe 128 des vorderen Hilfsrahmens 28, 128, 30 untergebracht ist. Wie die Traverse 21 des hinteren Hilfsrahmens und die Welle 24 der Rotorwerkzeuge 125 verlaufen auch die Traverse 30 und die Welle 31 des vorderen Hilfsrahmens schräg zur Normalen der Bewegungsrichtung F der Maschine, vorzugsweise mit demselben Winkel, im Ausführungsbeispiel etwa 20°. Die Traversen 1 und 2 des Grundrahmens, die Traverse 21 des hinteren Hilfsrahmens, die Traverse 30 des vorderen Hilfsrahmens sowie die Wellen 24, 31 und 47 sind zueinander vorzugsweise parallel und verlaufen schräg zur Bewegungsrichtung F der Maschine.

Auf der Welle 31 des vorderen Hilfsrahmens 28, 128, 30 sind Schneidräder 132 befestigt, von denen jedes aus mehreren Messern 32 besteht, die einen Winkelabstand zueinander haben. Die Schneidräder 132 können ähnlich wie eine Fräse ausgebildet sein. Der vordere Hilfsrahmen 28, 128, 30 kann dadurch angehoben und abgesenkt werden, daß er um die horizontale, hintere Achse 29, die parallel zu der Kardanwelle 19 verläuft und über die er an den Seitenstreben 20, 120 des hintere Hilfsrahmens angelenkt ist, geschwenkt wird. Hierzu dient beispielsweise eine Stellspindel 33, die von Hand betätigt werden kann und die einerseits mit der Traverse 30 des vorderen Hilfsrahmens und andererseits mit der darüberliegenden, vorderen Traverse 1 des Grundrahmens 1, 2, 3, 4 verbunden ist.

Vor der Welle 31 mit den Schneidrädern 132 befindet sich eine Rolle 34, die frei drehbar zwischen zwei seitlichen Tragarmen 35 gelagert ist, welche koaxial zur Welle 31 der Schneidräder 132 schwenkbar am vorderen Hilfsrahmen 28, 128, 30 angelenkt sind. Die Rolle 34 kann im vorderen Hilfsrahmen angehoben und abgesenkt werden, beispielsweise mit Hilfe einer Stellspindel 36, um dadurch die Eindringtiefe der nachfolgenden Schneidräder 132 zu verändern. Auch die vordere Rolle 34 verläuft schräg zur Bewegungsrichtung F der Maschine und i.w. parallel zur Welle 31 der Schneidräder 132.

Dadurch, daß die beiden Stellspindeln 36 an den Tragarmen 35 für die Rolle 34 angreifen, welche ihrerseits koaxial zur Welle 31 verschwenkbar sind, bleibt der Abstand zwischen der Rolle 34 und der von den Messern 32 beschriebenen Bahn immer konstant.

Die Rolle 34 hat vorzugsweise eine i.w. schraubenförmig verlaufende Rippe 50. Durch die Reibung dieser Rippe 50 auf der Bodenoberfläche wird sichergestellt, daß sich die Rolle 34 im Betrieb der Maschine immer dreht.

Wie Figur 1 zeigt, wird durch das Profil der Messer 32 der Schneidräder 132 und die Schrägstellung ihrer Drehachse (Welle 31) sichergestellt, daß die gesamte, von der Rolle 34 überstrichene Bodenfläche von den Messern 32 bearbeitet wird.

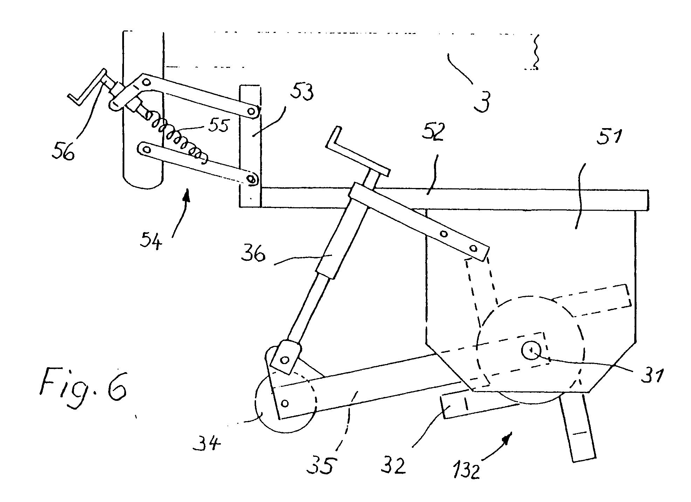

Figur 6 zeigt eine Variante für die Aufhängung des vorderen Hilfsrahmens. Die Schneidräder 132 sind mit ihrer Welle 31 drehbar zwischen zwei Seitenwänden 51 gelagert, die an zwei Längsarmen 52 befestigt sind und die beiden Tragarme 35 tragen, die schwenkbar um die Achse 31 gelagert sind. Der Längsarm 52 auf jeder Seite der Maschine hat einen vertikalen Fortsatz 53, der über ein Gelenkviereck 54 an Längsstreben 3 des Grundrahmens aufgehängt ist. Am Gelenkviereck 54 greift eine Zugfeder 55 an, deren Spannung mittels einer Stellschraube 56 eingestellt werden kann. Durch diese elastische Aufhängung wird die erste Einrichtung zum Zerkleinern des Pflanzenmaterials, bestehend aus der Rolle 34 und den Schneidrädern 132, in die Lage versetzt, Unebenheiten des Geländes zu folgen.

Es ist besonders günstig, wenn die gesamte erste Einrichtung, bestehend aus der Rolle 34 und den nachfolgenden Schneidrädern 132, abnehmbar am Grundrahmen befestigt ist, so daß sie auch an der Vorderseite eines Traktors angebaut werden kann.

Im gezeigten Ausführungsbeispiel werden die Welle 24 der Rotorwerkzeuge 125, die Zwischenwelle 47 und die Welle 31 der Schneidräder 132 über eine mechanische Übertragung durch die Schlepperzapfwelle angetrieben. Es ist aber auch möglich, für diese Wellen 24, 31 und 47 einen hydraulischen Antrieb vorzusehen, der ebenfalls vom Schleppermotor abgeleitet ist. Ferner besteht die Möglichkeit, alle Werkzeuge der Maschine durch eine Motorgruppe anzutreiben, die unabhängig vom Schlepper ist. Schließlich besteht auch die Möglichkeit, die gesamte Maschine als Selbstfahreinrichtung auszubilden.

Alle Räder und Rotoren der Maschine können in einem beliebigen Drehsinn angetrieben werden, auch entgegengesetzt zueinander. Ferner können Einrichtungen vorgesehen werden, um das Verhältnis der verschiedenen Drehzahlen der Rotoren und Räder zueinander zu verändern.

Schließlich besteht auch die Möglichkeit, wenigstens einen Teil der sich drehenden Werkzeuge frei drehbar auszubilden.

Die Schneidräder 132 sind insgesamt von einer Abdeckhaube 37 abgedeckt, die mit ihrem vorderen Ende an der Traverse 30 des vorderen Hilfsrahmens befestigt ist und sich frei kragend nach hinten erstreckt. Selbstverständlich ist auch eine umgekehrte Befestigung möglich, bei der die Abdeckhaube 37 mit ihrem hinteren Ende an einem tragenden Teil verankert ist und sich nach vorn erstreckt.

Zur Befestigung der Abdeckhaube 37 an der Traverse 30 dient ein normales oder ein elastisches Scharniergelenk 38, so daß die Abdeckhaube 37 elastisch nach oben nachgeben kann, um Beschädigungen durch Steine oder dgl. zu vermeiden. Die elastische Aufhängung der Abdeckhaube 37 erzeugt außerdem Vibrationen während des Betriebs, so daß dadurch Erdklumpen oder dgl. abgeschüttelt werden, die sich sonst an der Unterseite der Abdeckhaube 37 festsetzen würden.

Die beschriebene und dargestellte Maschine kann für die verschiedensten Arbeiten eingesetzt werden, nicht zuletzt deshalb, weil die einzelnen Werkzeuge 112, 14, 125, 132 und 34 unabhängig voneinander angehoben und abgesenkt und die Arbeitstiefen einzeln eingestellt werden können. Vorzugsweise wird jedoch die Arbeitstiefe der einzelnen, hintereinander angeordneten Werkzeuge so gewählt, daß die folgende Bodenbearbeitung durchgeführt werden kann:

Die vordere, zylindrische Rolle 34 legt Stoppeln, Stengel und Pflanzenreste im allgemeinen, die von zuvor durchgeführtem Anbau zurückgeblieben sind, sowie Unkraut, das auch auf noch nicht bearbeitetem Boden gewachsen ist, um und walzt diese nieder. Die nachfolgenden Schneidräder 132 zerstückeln diese Rückstände, Pflanzenreste und das Unkraut gegen den Boden, wobei gleichzeitig dieser Boden bis zu einer begrenzten Tiefe zerkleinert wird, beispielsweise 5 bis 10 cm; dabei werden die zerstückelten Pflanzenteile mit dem zerkleinerten Erdreich gemischt. Die vordere Rolle 34 ist verhältnismäßig nahe an den Schneidrädern 132 angeordnet, beispielsweise etwa 3 cm von der äußeren Bewegungsbahn der Messer 32, so daß diese auch dafür sorgen, daß die Rolle 34 frei von Erdreich gehalten wird. Aufgrund dieses kleinen Abstandes ist außerdem sichergestellt, daß die Messer 32 das Pflanzenmaterial zerkleinern können, wenn dieses von der Rolle 34 noch gegen den Boden gehalten wird.

Die Messer 12 der nachfolgenden Aufreißorgane 112 dringen tiefer in den Boden ein, beispielsweise 15 bis 30 cm, wobei sie den Boden aufreißen und lockern, ohne ihn zu wenden. Die an den Aufreißorganen 112 befestigten Pflugstreichbleche 14 sind so ausgebildet und in der Höhe verstellbar, daß sie nur eine obere Schicht des von den Messern 12 aufgerissenen und aufgelockerten Bodens teilweise umpflügen, beispielsweise um etwa 90° umwenden; diese Schicht des Bodens ist härter als die Schicht des von den Schneidrädern 132 bearbeiteten Erdreichs. Die Rotorwerkzeuge 125 schließlich, die i.w. die Funktion einer Egge zum Zerkrümeln und Wenden des Bodens haben, arbeiten in einer Tiefe, die geringer ist als die Eindringtiefe der Messer 12 der Aufreißorgane 112, vorzugsweise jedoch geringfügig größer als die Eindringtiefe der Pflugstreichbleche 14, wodurch verhindert wird, daß die Pflugstreichbleche 14 eine feste, kompakte und durchgehende Fläche im Boden bilden. Mit Hilfe der Rotorwerkzeuge 125 wird das von den Pflugstreichblechen 14 begonnene Wenden des Erdreiches abgeschlossen, und zwar auf 180°; gleichzeitig zerkrümeln die Rotorwerkzeuge 125 das Erdreich und vermischen die Schicht, die von den Pflugstreichblechen 14 gepflügt worden ist, mit einem Teil des tiefer liegenden Erdreiches, das von den Messern 12 der Aufreißorgane 112 aufgerissen worden ist, wobei jedoch unterhalb der gewendeten und gemischten Schicht eine Schicht zurückbleibt, die nicht umgepflügt ist, sondern nur von den Messern 12 aufgerissen wurde.

Es ist wesentlich, daß die beschriebenen Arbeitsgänge von einer Maschine ausgeführt werden, die im Verhältnis zu bisher bekannten Maschinen, die für vergleichbare Arbeiten eingesetzt werden, in Bewegungsrichtung eine geringere Breite hat und eine kleinere Leistung erfordert, da die Zugkraft des Schleppers überwiegend von den Aufreißorganen und den damit verbundenen Pflugscharen abgenommen wird, während die rotierenden Werkzeuge wie die Schneidräder 132 und die Rotorwerkzeuge 125 überwiegend die vom Motor des Schleppers aufgebrachte Energie abnehmen. Daraus ergibt sich, daß eine wesentliche Eigenschaft der Maschine gemäß der Erfindung in der schräg zur Bewegungsrichtung verlaufenden Anordnung liegt.

Die landwirtschaftliche Maschine gemäß der Erfindung hat vorzugsweise eine Modulstruktur, so daß beispielsweise ihre Breite variiert werden kann, indem die Zahl und/oder der Abstand der Aufreißorgane 112, der Schneidräder 132 und der Rotorwerkzeuge 125 verändert wird.

Selbstverständlich ist die Erfindung nicht auf das beschriebene und dargestellte Ausführungsbeispiel beschränkt, sondern kann weitere Änderungen und Varianten erfahren. So ist es beispielsweise auch möglich, die Maschine mit weiteren, landwirtschaftlichen Bearbeitungswerkzeugen zu koppeln oder zu kombinieren.

Schließlich besteht auch die Möglichkeit, die Maschine zerlegbar auszubilden, so daß die einzelnen Werkzeuggruppen wie die Schneidräder und/oder die Rotorwerkzeuge und/oder die Aufreißorgane einzeln eingesetzt oder unterschiedlich zueinander angeordnet oder mit anderen, landwirtschaftlichen Werkzeugen kombiniert werden können; hierzu ist es günstig, wenn die genannten Gruppen jeweils einen eigenen Rahmen bzw. Hilfsrahmen haben, der über Kuppelorgane an die anderen Rahmen und/oder den Schlepper angebaut werden kann.

Die genannten Werkzeuggruppen der Maschine können einzeln oder miteinander kombiniert so eingesetzt werden, daß sie von dem Schlepper gezogen oder auch geschoben werden. Die Maschine gemäß der Erfindung kann auch mit Einrichtungen versehen werden, die das Aufwirbeln des Erdreiches durch die Aufreißorgane einschränken und das Erdreich zwischen den Pflugscharen und den nachfolgenden Rotorwerkzeugen führen, denn die Erde vergrößert dabei ihr Volumen, insbesondere in Längsrichtung, wodurch sich Anhäufungen und Bearbeitungsunregelmäßigkeiten ergeben. Diese Einrichtungen können beispielsweise mit der Abdeckhaube der Schneidräder 132 verbunden sein oder einen eigenen Rahmen haben, der am Grundrahmen befestigt ist.

Die landwirtschaftliche Maschine gemäß der Erfindung ist insbesondere zur Bearbeitung von Boden geeignet, der zuvor noch nicht angebaut worden war und der damit viel Unkraut aufweist, vor allem aber von landwirtschaftlichen Flächen, auf denen zuvor schon ein Anbau stattgefunden hatte und die damit pflanzliche Überreste dieses Anbaus trägt, z.B. Stoppeln, Stengel o. dgl. Die Maschine zerkleinert das Pflanzenmaterial und pflügt dieses im allgemeinen mit einer Oberflächenschicht um, wodurch sich eine obere Schicht von gewendetem, zerkrümelten und lokkeren Erdreich, eine Zwischenschicht von mit den zerkleinerten Pflanzenteilen gemischtem und untergepflügten Erdreich sowie eine unterste, nicht zu tiefe Schicht von aufgebrochenem, vorzugsweise jedoch nicht umgepflügten Erdreich ergeben.

**Patentansprüche**

1. Landwirtschaftliche Maschine für die Bodenbearbeitung mit mehreren Reihen von Bearbeitungswerkzeugen, von denen jede Reihe auf einer Achse angeordnet ist, die schräg zur Bewegungsrichtung der Maschine verläuft, gekennzeichnet durch eine erste Einrichtung (34, 132) zum Zerkleinern des Pflanzenmaterials, hinter der eine Reihe von Aufreißorganen (112) zum Aufreißen und Anheben von Erdreich und zum Unterpflügen des zerkleinerten Pflanzenmaterials angeordnet ist, und durch eine abschließende Gruppe von Werkzeugen (125) zum Zerkleinern des Bodens und zum abschließenden Wenden des zerkrümelten Erdreiches auf das zerkleinerte Pflanzenmaterial.

2. Maschine nach Anspruch 1, dadurch gekennzeichnet, daß die erste Einrichtung zum Zerkleinern des Pflanzenmaterials aus einem Organ (34) zum Abbiegen des Pflanzenmaterials gegen den Boden und aus einer nachfolgenden Reihe von rotierenden Messern (32) zum Zerkleinern des Pflanzenmaterials gegen den Boden besteht.

3. Maschine nach Anspruch 2, dadurch gekennzeichnet, daß der Abstand zwischen dem Organ (34) und der äußeren Bewegungsbahn der Messer (32) so klein ist, daß die Messer (32) das Pflanzenmaterial im von dem Organ (34) gegen den Boden geknickten Zustand schneiden.

4. Maschine nach einem der vorhergehenden Ansprüche, dadurch gekennzeichnet, daß das Organ (34) mit Mitteln (36) zur Höhenverstellung verbunden ist, die bei einer Höhenverstellung den Abstand zwischen dem Organ (34) und der äußeren Bewegungsbahn der Messer (32) i.w. konstant halten.

5. Maschine nach einem der Ansprüche 2 bis 4, dadurch gekennzeichnet, daß das Organ aus einer Rolle (34) besteht, die um eine Achse frei drehbar ist, welche schräg zur Normalen der Bewegungsrichtung (F) verläuft.

6. Maschine nach Anspruch 5, dadurch gekennzeichnet, daß die Rolle (34) Mittel (50) für den Drehantrieb mittels Reibung dieser Mittel mit dem Boden aufweist.

7. Maschine nach Anspruch 6, dadurch gekennzeichnet, daß die Mittel für den Drehantrieb aus einer im wesentlichen schraubenförmig verlaufenden Rippe (50) bestehen.

8. Maschine nach einem der Ansprüche 2 bis 7, dadurch gekennzeichnet, daß das Profil der Messer (32) zusammen mit der Schräganordnung ihrer Achse eine Bearbeitung des gesamten, von dem Organ (34) überstrichenen Bodens sichert.

9. Maschine nach Anspruch 8, dadurch gekennzeichnet, daß jeweils zwei diametral gegenüberliegende Messer (32) zusammen ein S-förmiges Profil bilden.

10. Maschine nach einem der vorhergehenden Ansprüche, dadurch gekennzeichnet, daß die erste Einrichtung (34, 132) an einem Rahmen der Maschine elastisch so aufgehängt ist, daß sie sich an den Bodenverlauf anpaßt.

11. Maschine nach Anspruch 10, dadurch gekennzeichnet, daß die erste Einrichtung (34, 132) an dem Rahmen über ein Gelenkviereck (54) aufgehängt ist, an dem ein elastisches Element (55) angreift, dessen Spannung einstellbar ist.

12. Maschine nach einem der vorhergehenden Ansprüche, dadurch gekennzeichnet, daß die Aufreißorgane (112) einen vorderen Teil (12) zum Eindringen in das Erdreich und einen hinteren, pflugartigen Teil (14) zum Umpflügen des von dem vorderen Teil (12) aufgerissenen Bodens und zum Bedecken des zerkleinerten Pflanzenmaterials aufweisen.

13. Maschine nach Anspruch 12, dadurch gekennzeichnet, daß der hintere Teil (14) bezüglich des vorderen Teils (12) höhenverstellbar ist.

14. Maschine nach Anspruch 12 oder 13, dadurch gekennzeichnet, daß die Aufreißorgane (112) Leitplatten (13) zur geradlinigen Führung der Maschine in Bewegungsrichtung (F) aufweisen.

15. Maschine nach einem der vorhergehenden Ansprüche, dadurch gekennzeichnet, daß jedes Werkzeug (125) der abschließenden Gruppe als Rotor mit einer Nabe (46) ausgebildet ist, die an einer gemeinsamen Welle (24) befestigt ist und mehrere, gegeneinander verschränkte Schaufeln (25) trägt.

16. Maschine nach Anspruch 15, dadurch gekennzeichnet, daß die Schaufeln (25) schräg zur Radialrichtung der Nabe (46) angeordnet sind.

17. Maschine nach Anspruch 15 oder 16, dadurch gekennzeichnet, daß jedem Rotorwerkzeug (125) ein Abstreifblech (27) zum Säubern der Schaufeln (25) und zur Vervollständigung des Umpflügvorganges zugeordnet ist.

18. Maschine nach einem der vorhergehenden Ansprüche, dadurch gekennzeichnet, daß zwischen den Aufreißorganen (112) und den Werkzeugen (125) zum Zerkleinern des Bodens eine Zwischenwelle (47) angeordnet ist, die Klumpenbrecher (48) zum Zerkleinern von durch die hinteren Teile (14) der Aufreißorgane (112) angehobenen Erdteilen trägt.

19. Maschine nach Anspruch 18, dadurch gekennzeichnet, daß die Drehgeschwindigkeit der Zwischenwelle (47) größer als die Drehgeschwindigkeit der Rotorwerkzeuge (125) ist.

20. Maschine nach einem der vorhergehenden Ansprüche, dadurch gekennzeichnet, daß alle Gruppen der Bearbeitungswerkzeuge in einem gemeinsamen Rahmen getragen sind, der von einem Traktor gezogen werden kann.

21. Maschine nach einem der Ansprüche 1 bis 19, dadurch gekennzeichnet, daß alle Gruppen der Bearbeitungswerkzeug von wenigstens zwei Rahmen getragen sind, von denen ein erster Rahmen die erste Einrichtung (34, 132) zum Zerkleinern des Pflanzenmaterials trägt und vor einem Schlepper anbaubar ist, während der zweite Rahmen die Aufreißorgane (112), die Rotorwerkzeuge (125) und die möglicherweise vorhandenen Klumpenbrecher (48) trägt, wobei der erste und der zweite Rahmen unabhängig voneinander zur Bodenbearbeitung geeignet sind.

22. Maschine nach einem der vorhergehenden Ansprüche, dadurch gekennzeichnet, daß die Bearbeitungswerkzeuge an einen i.w. rechteckigen Querschnitt aufweisenden Traversen (1, 2, 21) des Rahmens der Maschine mittels Klemmen (11) befestigt sind, die aus jeweils zwei Spannbacken (111, 211) mit Winkelprofil und wenigstens einer Schraube (44) bestehen, die zum Befestigen der beiden Spannbacken (111, 211) untereinander und auf der Traverse (1, 2, 21) in ein an einer Spannbacke (211) befestigtes Gewindeteil (45) einschraubbar ist.

**Revendications**

1. Machine agricole pour travailler le sol, comportant une pluralité de séries de outils, chaque série étant disposée le long d'un axe incliné au regard de la direction de marche de la machine, caractérisée par un premier outil (34, 132) pour broyer des moyens végétaux, à l'arrière duquel est disposée une pluralité de éléments (112) pour fendre et soulever le sol et pour enterrer les dits moyens végétaux, et caractérisée par un groupe final de outils de concassage (125) pour l'émiettement du sol et pour le versement final du sol émietté sur les moyens végétaux broyés.

2. Machine selon la revendication 1, caractérisée en ce que le premier outil pour broyer des moyens végétaux comporte un élément (34) pour plier contre le sol lesdits moyens végétaux et une suivante série de lames (32) tournant pour broyer les moyens végétaux contre le sol.

3. Machine selon la revendication 2, caractérisée en ce que la distance entre l'élément (34) et la trajectoire des lames (32) est menue de la manière que lesdites lames (32) tranchent les moyens végétaux dans le moment où ils se trouvent encore pliés contre le sol.

4. Machine selon l'une quelconque des revendications précédentes, caractérisée en ce que l'élément (34) est couplé à des moyens pour le réglage en hauteur (36), qui peuvent garder substantiellement constante la distance entre l'élément (34) et la trajectoire des lames (32).

5. Machine selon l'une quelconque des revendication de 2 à 4, caractérisée en ce que ledit élément comporte un rouleau (34), qui est apte à librement tourner autour d'un axe incliné aver regard à la perpendiculaire à la direction de marche (F).

6. Machine selon la revendication 5, caractérisée en ce que le rouleau (34) comporte des moyens (50), qui sont aptes à assurer un mouvement de rotation grâce à la friction desdits moyens avec le sol.

7. Machine selon la revendication 6, caractérisée en ce que lesdits moyens comportent une nervure (50) à développement hélicoidal.

8. Machine selon une quelconque des revendications de 2 à 7, caractérisée en ce que le profil des lames (32) assure, en combinaison avec l'inclination de leur axe de rotation, que tout le sol soit travaillé par l'élément (34).

9. Machine selon la revendication 8, caractérisée en ce que deux lames (32) qui soient diamétralment opposées se développent selon un profil à S.

10. Machine selon une quelconque des revendications précédentes, caractérisée en ce que le premier outil (34, 132) est suspendu élastiquement à un châssis de la machine, de façon qu'il peut suivre le cours du sol.

11. Machine selon la revendication 10, caractérisée en ce que le premier outil (34, 132) est suspendu au châssis de la machine au moyen d'un quadrilatère articulé (54), qui est controllé par un élément élastique (55), grâce à sa tension réglable.

12. Machine selon une quelconque des revendications précédentes, caractérisée en ce que les éléments (112) pour fendre et soulever le sol et pour enterrer les moyens végétaux comportent une partie antérieure (12) qui est apte à pénétrer dans le sol et une partie postérieure (14) à soc qui est apte à renverser le sol creusé par la partie antérieure (12) pour couvrir les moyens végétaux broyés.

13. Machine selon la revendication 12, caractérisée en ce que la partie postérieure (14) est réglable en hauteur au regard de la partie antérieure.

14. Machine selon la revendication 12 ou 13, caracterisée en ce que les éléments (112) comportent des plaques directrices (13), qui sont aptes à assurer la marche rectiligne de la machine dans la direction (F).

15. Machine selon une quelconque des revendications précédentes, caractérisée en ce que chacun outil de concassage (125) de la serie finale comporte un moyeu (46) qui est fixé à un arbre commun (24), ledit moyeu faisant la function d'un rotor et étant apte à supporter une pluralité de pales gauchies (25).

16. Machine selon la revendication 15, caractérisée en ce que les pale (25) sont inclinées au regard de la direction radiale du moyeu (46).

17. Machine selon la revendication 15 ou 16, caractérisée en ce que à chacun outil de concassage (125) est associé un racleur (27) qui est apte à nettoyer les pales (25) et à compléter le renversement du sol.

18. Machine selon une quelconque des revendications précedentes, caractérisée en ce que, entre les éléments (112) et les outils (125) est placé un arbre intermédiaire (47), qui supporte une pluralité de casse-mottes (48), qui sont apte à casser les mottes soulevées par les parties postérieures (14) des éléments (112).

19. Machine selon la revendication 18, caractérisée en ce que la vitesse de rotation de l'arbre intermédiaire (47) est plus grande que celle des outils (125).

20. Machine selon une quelconque des revendications précedentes, caractérisée en ce que la pluralitè complète de séries de outils est supportée par un châssis commun, qui est apte à être traîné par un tracteur.

21. Machine selon une des revendications de 1 à 19, caractérisée en ce que la pluralité complète de séries de outils est supportée par au moins deux châssis, le premier desquels porte un premier outil (34, 132) pour broyer des moyens végétaux, ce premier outil étant apte à être placé devant un tracteur, tandis que le second châssis porte les éléments (112) pour fendre et soulever le sol, les outils de concassage (125) et les casse-mottes (48) éventuellement présents, le premier et le second châssis étant aptes à travailler le sol, l'un indépendemment de l'autre.

22. Machine selon une quelconque des revendications précedentes, caractérisée en ce que les outils pour travailler le sol sont fixés à une traverse (1, 2, 21) qui présente une section transversal substantiellement rectangulaire, ladite traverse (1, 2, 21) étant fixée au châssis de la machine au moyen d'un étau (11) qui comporte deux mâchoires (111, 211), chacune desquelles a un profil angulaire et au moyen d'au moins un boulon (44) qui est vissable dans un élément taraudé fixé à une mâchoire (211) pour permettre que les deux mâchoires (111, 211) soient fixées une à l'autre et sur la traverse.

**Claims**

1. A soil cultivating agricultural machine, comprising a plurality of rows of cultivating tools, each row being arranged upon an axis inclined with respect to the direction of travel of the machine, characterized by a first device (34, 132) for breaking up plant-material, behind said first device being arranged a row of elements (112) for ripping up and lifting the soil and for burying said broken up plant-material, and characterized by a final group of soil crumbling tools (125), said tools (125) being adapted to finally turn crumbled soil onto the broken up plant-material.

2. A machine according to claim 1, characterized in that the first device for breaking up plant-material consists of an element (34) for bending said plant-material towards the soil and of a subsequent row of rotating blades (32) for breaking up the plant-material against the soil.

3. A machine according to claim 2, characterized in that the distance between the element (34) and the outer path of travel of blades (32) is so small that said blades (32) cut the plant-material in the condition in which they are bent towards the soil by said element (34).

4. A machine according to one of the preceding claims, characterized in that the element (34) is connected to height-adjustment means (36), which, when a height-adjustment is made, keeps the distance between said element (34) and the outer path of travel of the blades (32) substantially constant.

5. A machine according to one of claims 2 to 4, characterized in that said element consists of a roller (34) freely rotating about an axis which runs inclined with respect to the line perpendicular to the direction of travel (F).

6. A machine according to the claim 5, characterized in that the roller (34) comprises means (50) which drive it in rotation by friction between the said means and the soil.

7. A machine according to claim 6, characterized in that said means for the rotary drive consist of a substantially helical rib (50).

8. A machine according to one of claims 2 to 7, characterized in that the profile of the blades (34), together with the inclined arrangement of their axis, unsures the working of all the soil over which the element (34) passes.

9. A machine according to claim 8, characterized in that each of two diametrically opposed blades (34) together form an S-shaped profile.

10. A machine according to one of the preceding claims, characterized in that the first device (34, 132) is resiliently suspended from a frame of the machine, in such a manner as to adapt itself to the contours of the soil.

11. A machine according to claim 10, characterized in that the first device (34, 132) is suspended from the frame by means of an articulated quadrilateral (54), which is adapted to be controlled by a resilient element (55), the tension of which is adjustable.

12. A machine according to one of the preceding claims, characterized in that the ripping elements (112) comprise a front part (12) for penetrating into the soil and a rear, plough-like part (14) for ploughing up the soil ripped up by said front part (12) and for covering up the broken up plant-material.

13. A machine according to claim 12, characterized in that the rear part (14) is height-adjustable with respect to the front part (12).

14. A machine according to claim 12 or 13, characterized in that the ripping elements (112) comprise guide-plates (13) for guiding the machine in a straight line in the direction of travel (F).

15. A machine according to one of the preceding claims, characterized in that each one of soil crumbling tools (125) of the final group is provided with a hub (46) in the form of a rotor, said hub (46) being adapted to be secured to a common shaft (24), said hub (46) being adapted to carry a plurality of scoops (25), said scoops being staggered in relation to each other.

16. A machine according to claim 15, characterized in that the scoops (25) are arranged in a inclined way with respect to the radial direction of the hub (46).

17. A machine according to claim 15 or 16, characterized in that each soil crumbling tool (125) is provided with a scraper-blade (27), which cleans the blades (25) and completes the ploughing up process.

18. A machine according to one of the preceding claims, characterized in that an intermediate shaft (47) is provided between the ripping elements (112) and soil-crumbling tools (125), said intermediate shaft (47) being adapted to carry a plurality of clod-breakers (48) which break up lumps of soil lifted by the rear parts (14) of said ripping elements (112).

19. A machine according to claim 18, characterized in that the rotational speed of the intermediate shaft (47) is higher than that of the soil-crumbling tools (125).

20. A machine according to one of the preceding claims, characterized in that all groups of cultivating tools are carried on a common frame, which can be pulled by a tractor.

21. A machine according to one of claims 1 to 19, characterized in that all groups of cultivating tools are carried by at least two frames, the first frame carrying the first device (34, 132) for breaking-up plant-material and being adapted to be connected to the front of a tractor, whereas the second frame carries the ripping elements (112), soil crumbling tools (125) and any clod crumbling which may be present, the first and the second frame being adapted to work the soil independently from each other.

22. A machine according to one of the preceding claims, characterized in that the soil cultivating tools are connected to a cross member (1, 2, 21) which presents a substantially rectangular cross-section, said cross member (1, 2, 21) being connected to the frame of the machine by means of clamps (11), each one consisting of two jaws (111, 211) with angle profile and at least with a screw (44) which is adapted to be screwed to a threaded part (45) secured to a jaw (211) for the purpose of securing the said jaws to each other and to the cross member (1, 2, 21).

Fig.1

Fig. 2

Fig. 3

EP 0 216 922 B1

Fig.5

Fig.4

4

Fig. 6